(19) Europäisches Patentamt
European Patent Office
Office européen des brevets

(11) EP 3 051 728 A1

(12) EUROPEAN PATENT APPLICATION

(43) Date of publication:
03.08.2016 Bulletin 2016/31

(51) Int Cl.:
H04L 1/00 (2006.01)   H04L 5/00 (2006.01)

(21) Application number: 15305135.4

(22) Date of filing: 30.01.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ALCATEL LUCENT
92100 Boulogne-Billancourt (FR)

(72) Inventors:
• WONG, Shin Horng
  Swindon, Wiltshire SN5 7DJ (GB)

• BAKER, Matthew P J
  Swindon, Wiltshire SN5 7DJ (GB)

(74) Representative: Bryers LLP
7 Gay Street
Bath, Bath and North East Somerset BA1 2PH
(GB)

Remarks:
Claims filed after the date of filing of the application
(Rule 68(4) EPC).

(54) **METHOD FOR PROVIDING A REPETITION RATE**

(57) A method for providing, on a first downlink channel between a node in a wireless telecommunication network and user equipment, a repetition rate for at least one other channel between the node and the user equipment, the method comprising calculating the repetition rate using multiple parameters received at the user equipment representing transport channel properties and a repetition rate of the first downlink channel.

FIGURE 1

## Description

TECHNICAL FIELD

Aspects relate, in general, to a method for providing a repetition rate, a node and a computer program product.

BACKGROUND

Wireless telecommunications systems are known. In a cellular system, radio coverage is provided to user equipment, for example, mobile phones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink channels. Information and data transmitted by user equipment to the base station occurs on channels of radio carriers known as uplink channels. Although the deployment of base stations is largely controllable by the network operator, the deployment of user equipment is not. The deployment of user equipment within the network can cause unexpected consequences.

Accordingly, it is desired to provide an improved technique for communicating with user equipment.

SUMMARY

According to an example, there is provided a method for providing, on a first downlink channel between a node in a wireless telecommunication network and user equipment, a repetition rate for at least one other channel between the node and the user equipment, the method comprising calculating the repetition rate using multiple parameters received at the user equipment representing transport channel properties and a repetition rate of the first downlink channel. Multiple parameters can be used to calculate a repetition rate for the at least one other channel using a predefined function relating the parameters. That is, for example, the parameters can be input to a predefined function that relates the parameters in order to enable a repetition rate to be calculated. A base repetition value can be calculated using the multiple parameters representing transport channel properties. For example, the parameters can be input to a lookup table to determine the base value. The lookup table can be predefined in the network specification and thus known to network entities such as UE, or may be replaced by a function that can be used to calculate the base value.

The multiple parameters representing transport channel properties can be a modulation coding scheme (MCS) index and number of physical resource blocks. The repetition rate can be calculated using the base repetition value and repetition rate of the first downlink channel. The multiple parameters representing transport channel properties can map to or can be used to calculate a base repetition value. At least one additional repetition parameter can be transmitted to the user equipment representing a reference retransmission rate and/or a repetition factor for use with the predefined function. The reference retransmission rate and/or a repetition factor can be predefined/preselected parameters. It should be appreciated that radio propagation conditions such as a fading profile can affect the repetition required for PDSCH and PUSCH and therefore a single mapping/function that provides a single set of repetitions for PDSCH and PUSCH may not be flexible enough. These additional parameters allows the network to adapt the repetition of the PDSCH/PUSCH to different conditions of the radio propagation channel.

The repetition rate can be performed in the frequency domain first, whereby to use up all physical resource blocks (PRBs) so as to occupy the entire subband, followed repetitions in the time domain.

According to an example, there is provided user equipment, in a wireless telecommunication network, the user equipment in a connected mode of operation using a first downlink channel between a node of the network and the user equipment, wherein the user equipment is operable to calculate a repetition rate for at least one other channel between the node and the user equipment using multiple parameters received at the user equipment representing transport channel properties and a repetition rate of the first downlink channel. The user equipment (UE) can be a low cost/complexity (LC) device. For example, the LC-UE can be an machine type communication (MTC) UE. The user equipment can calculate the repetition rate for the at least one other channel using a predefined function relating the parameters. The user equipment can determine a base repetition value using the multiple parameters representing transport channel properties. The user equipment can calculate the repetition rate using the base repetition value and repetition rate of the first downlink channel. The user equipment can receive at least one additional repetition parameter representing a reference retransmission rate and/or a repetition factor for use with the predefined function. According to an example, there is provided a computer program product, comprising a computer usable medium having computer readable program code embodied therein, said computer readable program code adapted to be executed to implement a method as provided herein.

BRIEF DESCRIPTION OF THE DRAWINGS

Embodiments will now be described, by way of example only, with reference to the accompanying drawings, in which:

 Figure 1 is a schematic representation of a portion of a wireless telecommunication network according to an example; and

Figure 2 is a schematic representation of PDSCH repetition according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

User equipment (UE) can be deployed in areas suffering from high attenuation. This high attenuation can cause the UE to be unable to decode downlink configuration information, which is essential for being able to access appropriate downlink traffic. This means that when deployed in these areas of high attenuation, the UE is effectively unable to receive traffic from the base station. Existing standards fail to provide an adequate technique for providing this downlink configuration information in high attenuation deployments, which means that UE implementing those standards are unable to communicate with the network during such deployment.

Whilst this is inconvenient for some UE when located in these high attenuation areas, coverage may be restored when the UE moves to a lower attenuation area. However, there is a class of UE (such as low cost and/or complexity machine type communication (MTC) devices such as, for example, smart meters) which are immobile once installed; for those user equipment no or limited network coverage is provided.

Existing solutions target a 15-20 dB coverage improvement for such devices. Repetition of a message at the physical layer is one technique providing such coverage improvement. In order to achieve a 20 dB improvement, the theoretical number of repetitions needed is 100 times more than currently used. In reality, this amount of repetition is likely going to need to be even higher due to imperfect channel estimation, fading, frequency error, etc. Although repetition is a simple way to improve the coverage, it is highly inefficient in utilizing the spectrum especially when the amount of repetitions is very high (in the hundreds).

For some access channels in a network, multiple coverage levels can be provided, where in each level, the UE uses a different number of repetitions (with the highest coverage level using the maximum number of repetition) for spectral efficiency purposes. Recently, there has been interest in providing several coverage levels for each physical channel of the network. In order to reduce power consumption in a coverage enhanced mode of operation, the number of repetitions can be reduced. Therefore optimizing the number of repetitions to the UE radio condition for data channel such as PDSCH and PUSCH is highly beneficial for power consumption and spectral efficiency.

In a semi-static configuration, in which a UE is largely immobile, a node, such as an eNB, may configure the number of repetitions of the PDSCH and PUSCH using RRC messaging for example. However, the number of repetitions would need to be conservative since reconfiguring the repetition level requires costly RRC signaling. If some UE mobility may be expected, a semi-static approach may not be suitable.

A dynamic configuration may indicate the number of repetitions or repetition level of the PDSCH or PUSCH in the DCI. This allows for flexibility at the eNB. However, there is a trend to minimise the DCI size and hence additional bits to indicate the number of repetition may not be acceptable.

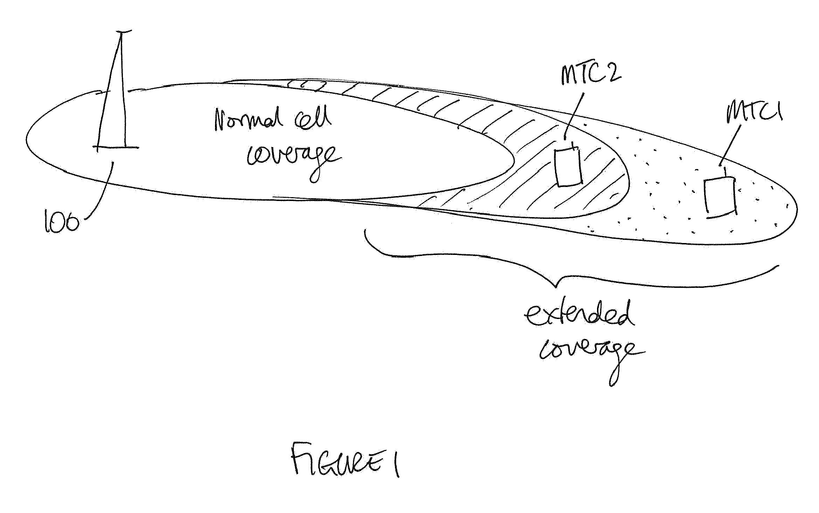

Figure 1 is a schematic representation of a portion of a wireless telecommunication network according to an example. A network node I 00, such as an eNB provides coverage for a cell which consists of the existing (termed as 'normal') coverage and the targeted coverage extension (due to for example, an MTC UE device located at the cell edge such as in a basement).

For those UE devices in the normal coverage, no additional coverage enhancement is required. For those devices in the extended coverage region as shown Figure 1, not all devices require as much as 20 dB coverage extension. Some devices (e.g. MTC 2 located in the region shaded in Figure 1) will require coverage extension that is less than 20 dB and hence a message to/from these devices would require less repetitions compared to a MTC device in the 20 dB region.

As an example, in Figure 1, MTCI requires a 20 dB improvement and MTC2 requires a 13 dB coverage improvement, so the number of repetitions for MTC2 is 4 times less than that of MTCI. The amount of resource saving from using less than the maximum number of repetitions for MTC2 is significant since the maximum number of repetitions is large (i.e. in the hundreds), thereby improving spectral efficiency significantly. Hence, providing different levels of coverage extension for MTC devices is desirable. Also, different channels will experience different levels of attenuation and so will require different numbers of repetitions in each coverage extension region. As noted, optimizing the number of repetitions to the UE radio condition for data channel such as PDSCH and PUSCH is highly beneficial for power consumption and spectral efficiency. Furthermore, reducing an overhead associated with signaling a change in repetition rate is advantageous. Accordingly, an efficient method that does not contribute to network overhead for indicating the number of repetitions for PDSCH and PUSCH is provided.

According to an example, repetition of a data channel, such as PDSCH and PUSCH for example, is a function of the Transport Channel Properties (e.g. modulation coding scheme (MCS) and number of PRBs, $N_{PRB}$) and the repetition of the physical control channel that carries scheduling information for the said data channel. The physical downlink control channel can be PDCCH, EPDCCH or a physical channel for a low cost/complexity UE, e.g. MPDCCH. The channel is referred to herein as EPDCCH, however, it will be appreciated that any physical control channel (PDCCH, MPDCCH and so) may be used.

In an example, Transport Channel Property parameters, such as MCS and $N_{PRB}$ along with the physical control channel repetition rate can be obtained as noted below:

- The MCS & $N_{PRB}$ are indicated in the DCI (Downlink Control Information) carried by the EPDCCH;
- The EPDCCH repetition is blindly decoded by the UE (note: the EPDCCH repetition may alternatively be indicated via RRC signaling if multiple repetitions are not blindly decoded).

Accordingly, the number of repetitions of the data channel can be determined dynamically by UE without a high signaling overhead, and in a way that can be designed to match the number of repetitions required for reliable reception: for example, a higher code rate (a function of the transport block size and number of PRBs) is likely to need a higher number of repetitions.

Different aggregation levels of EPDCCH for a UE, particularly a LC-UE such as an MTC UE for example, in coverage enhanced mode (CE-mode) can be achieved in time (i.e. repetition) rather than in frequency because the UE will:

- Operate in a reduced bandwidth of 1.4 MHz (or 6 PRBs)
- In CE-mode, EPDCCH would be transmitted in all 6 PRBs (i.e. in frequency domain the Aggregation Level is fixed)

The function can be predefined with required parameters broadcast by the network in the SIB or signaled to the UE via dedicated signaling (e.g. RRC configuration).

In an example, the MCS & $N_{PRB}$ are parameters to a lookup table which provides a base repetition number, $R_{BASE}$. The overall repetition $R_T$ (of the PDSCH or PUSCH) is a function of $R_{BASE}$ and the EPDCCH repetition $R_{EPDCCH}$. In an example, the lookup table can be fixed in the network specification and any additional parameters for the said function can be broadcast or signaled to the UE.

In another example, multiple functions utilizing $R_{BASE}$ and $R_{EPDCCH}$ can be used and an eNB can indicate in the DCI or RRC signaling which one of multiple functions to use to determine the PDSCH repetition $R_T$.

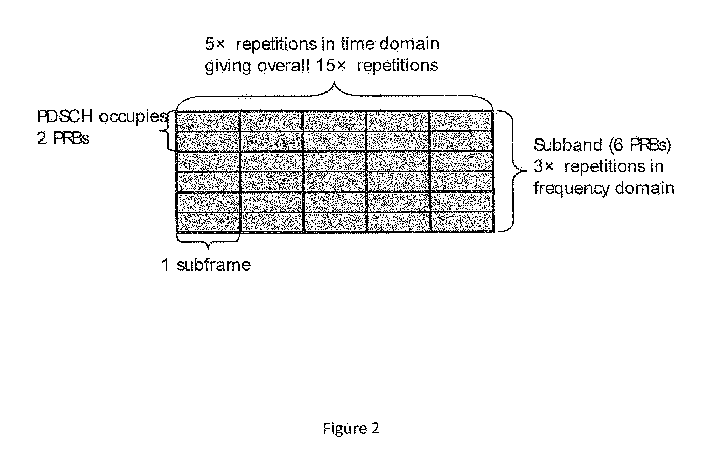

In another example, the determined PDSCH repetition using the said function is performed such that it is repeated in frequency first (i.e. fill up the whole subband) before repeating in time. For example if 2 PRBs are allocated to the UE for PDSCH and the number of repetitions is 15, the repetition would be performed as shown in Figure 2, which is a schematic representation of repetition of PDSCH according to an example. In the example of figure 2, the 2 PRB PDSCH is repeated 3× in the frequency domain (thereby occupying the entire subband) followed by 5× repetitions in time domain giving the total of 15× repetitions. This is applicable in the downlink. In the uplink (for PUSCH) using fewer PRBs would result in a higher PSD boosting.

Transport Block Size is determined by the TBS index, $I_{TBS}$ and the $N_{PRB}$ (number of allocated PRBs). The $I_{TBS}$ is determined from the allocated MCS. According to an example, the $I_{TBS}$ and $N_{PRB}$ can be used as input to a lookup table to determine $R_{BASE}$, where this lookup table is predefined in the specification. It should be appreciated that the lookup table for $R_{BASE}$ can be replaced by a function.

As part of the UE EPDCCH decoding process, it would have blindly decoded the number of EPDCCH repetitions, $R_{EPDCCH}$.

The $R_{BASE}$ and $R_{EPDCCH}$ parameters are then input into a function such as Equation I noted below. Here $\beta$ and a reference repetition level, $R_{REF}$, are parameters signaled to the UE either via broadcast from the SIB or via RRC signaling for example. The function ⌊⌋ rounds down the repetition to the nearest valid number of PDSCH repetitions (there may be a finite set of valid number of PDSCH repetitions). In alternative embodiment, the number of repetitions could be rounded *up* to the next valid number of PDSCH repetitions.

$$R_T = \left\lfloor \frac{R_{BASE} R_{EPDCCH}}{R_{REF}} + \beta \right\rfloor \qquad (1)$$

Hence using Equation I, the UE is able to determine the repetition of PDSCH or PUSCH based on the MCS, $N_{PRB}$ and the EPDCCH repetition. This avoids the need to explicitly signal a repetition value to the UE in the DCI.

It should be appreciated that Equation I is an example function that takes into the input parameter $R_{BASE}$ and $R_{EPDCCH}$ and other similar functions that takes at least MCS, $N_{PRB}$ and $R_{EPDCCH}$ parameters as input can be used.

A second function such as the one in Equation 2 can be defined in an example. The eNB can indicate (e.g. using I bit) which function it wants the UE to use to determine the PDSCH Repetition.

$$R_T = \left\lfloor R_{BASE} + \beta R_{EPDCCH} \right\rfloor \qquad (2)$$

Accordingly, a network node, such as an eNB can dynamically adjust the repetition of PDSCH and PUSCH without adding bits to a DCI message.

A repetition (or coverage) rate according to an example can be in the form of a numerical index which indicates the amount of repetition for physical channels except, typically, the primary and secondary synchronization signals (PSS/SSS) and physical broadcast channel (PBCH).

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for providing, on a first downlink channel between a node in a wireless telecommunication network and user equipment, a repetition rate for at least one other channel between the node and the user equipment, the method comprising:

    calculating the repetition rate using multiple parameters received at the user equipment representing transport channel properties and a repetition rate of the first downlink channel.

2. A method as claimed in claim 1, wherein multiple parameters are used to calculate a repetition rate for the at least one other channel using a predefined function relating the parameters.

3. A method as claimed in claim 1 or 2, further comprising:

    determining a base repetition value using the multiple parameters representing transport channel properties.

4. A method as claimed in claim 3, wherein the multiple parameters representing transport channel properties are a modulation coding scheme index and number of physical resource blocks.

5. A method as claimed in claim 3 or 4, wherein the repetition rate is calculated using the base repetition value and repetition rate of the first downlink channel.

6. A method as claimed in claim 3, wherein the multiple parameters representing transport channel properties map or are used to calculate a base repetition value.

7. A method as claimed in any preceding claim, further comprising:

    transmitting at least one additional repetition parameter to the user equipment representing a reference retransmission rate and/or a repetition factor for use with the predefined function.

8. A method as claimed in any preceding claim, wherein the repetition rate is performed in the frequency domain first, whereby to use up all PRBs so as to occupy the entire subband, followed repetitions in the time domain.

9. User equipment, in a wireless telecommunication network, the user equipment in a connected mode of operation using a first downlink channel between a node of the network and the user equipment, wherein the user equipment is operable to calculate a repetition rate for at least one other channel between the node and the user equipment using multiple parameters received at the user equipment representing transport channel properties and a repetition rate of the first downlink channel.

10. User equipment as claimed in claim 9, wherein the user equipment is a low cost/complexity (LC) device.

**11.** User equipment as claimed in claim 9 or 10, wherein the user equipment is operable to calculate the repetition rate for the at least one other channel using a predefined function relating the parameters.

**12.** User equipment as claimed in any of claims 9 to 11, wherein the user equipment is operable to determine a base repetition value using the multiple parameters representing transport channel properties.

**13.** User equipment as claimed in claim 12, wherein the user equipment is operable to calculate the repetition rate using the base repetition value and repetition rate of the first downlink channel.

**14.** User equipment as claimed in any of claims 9 to 13, wherein the user equipment is operable to receive at least one additional repetition parameter representing a reference retransmission rate and/or a repetition factor for use with the predefined function.

**15.** A computer program product, comprising a computer usable medium having computer readable program code embodied therein, said computer readable program code adapted to be executed to implement a method as claimed in any of claims 1 to 8.

**Amended claims in accordance with Rule 137(2) EPC.**

**1.** A method for providing, on a physical downlink control channel between a node in a wireless telecommunication network and user equipment, a number of repetitions for a physical data channel between the node and the user equipment, the method comprising:

> determining a base repetition value of the physical data channel using a modulation and coding scheme index and a number of physical resource blocks; and
> calculating the number of repetitions using the base repetition value and a number of repetitions of the physical downlink control channel.

**2.** A method as claimed in claim 1, wherein the number of repetitions for the physical data channel is calculated using a predefined function relating the base repetition value and the number of repetitions of the physical downlink control channel.

**3.** A method as claimed in claim 1 or 2, wherein the modulation and coding scheme index and number of physical resource blocks map to or are used to calculate the base repetition value.

**4.** A method as claimed in any preceding claim, further comprising:

> transmitting at least one additional repetition parameter to the user equipment representing a reference retransmission rate and/or a repetition factor for use with the predefined function.

**5.** A method as claimed in any preceding claim, wherein the number of repetitions for the physical data channel is performed in the frequency domain first, whereby to use up all PRBs so as to occupy the entire subband, followed by repetitions in the time domain.

**6.** User equipment (MTC1, MTC2), in a wireless telecommunication network, the user equipment in a connected mode of operation with a node (100) of the network using a physical downlink control channel, wherein the user equipment is operable to calculate a number of repetitions for a physical data channel between the node and the user equipment using a modulation coding scheme index and number of physical resource blocks received at the user equipment and a number of repetitions of the physical downlink control channel.

**7.** User equipment (MTC1, MTC2) as claimed in claim 6, wherein the user equipment is a low cost/complexity (LC) device.

**8.** User equipment (MTC1, MTC2) as claimed in claim 6 or 7, wherein the user equipment is operable to calculate the number of repetitions for the physical data channel using a predefined function relating the modulation coding scheme index and number of physical resource blocks and number of repetitions of the physical downlink control channel.

**9.** User equipment (MTC1, MTC2) as claimed in any of claims 6 to 8, wherein the user equipment is operable to determine a base repetition value using the modulation coding scheme index and number of physical resource blocks.

**10.** User equipment (MTC1, MTC2) as claimed in any of claims 6 to 9, wherein the user equipment is operable to receive at least one additional repetition parameter representing a reference retransmission rate and/or a repetition factor for use with the predefined function.

**11.** A computer program product, comprising a computer usable medium having computer readable program code embodied therein, said computer readable program code adapted to be executed to implement a method as claimed in any of claims 1 to 5.

FIGURE 1

5× repetitions in time domain
giving overall 15× repetitions

PDSCH occupies
2 PRBs

Subband (6 PRBs)
3× repetitions in
frequency domain

1 subframe

Figure 2

# EP 3 051 728 A1

| Europäisches Patentamt European Patent Office Office européen des brevets | **EUROPEAN SEARCH REPORT** | Application Number EP 15 30 5135 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 787 672 A1 (ALCATEL LUCENT [FR]) 8 October 2014 (2014-10-08) | 1-3,5-15 | INV. H04L1/00 H04L5/00 |
| A | * paragraph [0075] - paragraph [0097] * ----- | 4 | |
| A | ALCATEL-LUCENT ET AL: "Coverage enhancement for physical data & control channels", 3GPP DRAFT; R1-144697 - REL-13 MTC - PHYSICAL DATA & CONTROL CHANNELS V02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. RAN WG1, no. San Francisco, USA; 20141117 - 20141121 17 November 2014 (2014-11-17), XP050875780, Retrieved from the Internet: URL:http://www.3gpp.org/ftp/Meetings_3GPP_SYNC/RAN1/Docs/ [retrieved on 2014-11-17] * page 5 * ----- | 1-15 | |
| | | | TECHNICAL FIELDS SEARCHED (IPC) H04L |

The present search report has been drawn up for all claims

| Place of search | Date of completion of the search | Examiner |
|---|---|---|
| The Hague | 28 August 2015 | Hanus, Pavol |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
### ON EUROPEAN PATENT APPLICATION NO.

EP 15 30 5135

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2015

| Patent document cited in search report | | Publication date | Patent family member(s) | | Publication date |
|---|---|---|---|---|---|
| EP 2787672 | A1 | 08-10-2014 | EP | 2787672 A1 | 08-10-2014 |
| | | | TW | 201503751 A | 16-01-2015 |
| | | | WO | 2014161631 A1 | 09-10-2014 |

EPO FORM P0459

For more details about this annex : see Official Journal of the European Patent Office, No. 12/82